# FASCICULE DE BREVET EUROPEEN

(11) **EP 1 968 808 B1**
(45) Date de publication et mention de la délivrance du brevet: **01.09.2010**
(21) Numéro de dépôt: 06830763.6
(22) Date de dépôt: 20.12.2006
(51) Int. Cl.: B60C 5/04

(54) **PNEUMATIQUE AVEC CHAMBRE A AIR SILENCIEUX**
REIFEN MIT GERÄUSCHLOSER LUFTKAMMER
TYRE WITH NOISELESS AIR CHAMBER

(30) Priorité: 23.12.2005 FR 0513386
(43) Date de publication de la demande: 17.09.2008
(73) Titulaire: Société de Technologie Michelin, 63000 Clermont-Ferrand (FR); Michelin Recherche et Technique S.A., 1763 Granges-Paccot (CH)
(72) Inventeur: MERINO LOPEZ, Jose, F-63200 Riom (FR)
(74) Mandataire: Dequire, Philippe Jean-Marie Denis
(86) Numéro de dépôt international: PCT/EP2006/070043
(87) Numéro de publication internationale: WO 2007/071751

(56) Documents cités:
- EP-A- 0 663 306
- FR-A- 2 755 400
- US-A- 3 921 689
- PATENT ABSTRACTS OF JAPAN vol. 2003, no. 12, 5 décembre 2003 (2003-12-05) -& JP 2005 212577 A (YOKOHAMA RUBBER CO LTD:THE; MITSUBISHI MOTORS CORP), 11 août 2005 (2005-08-11)

## Description

### Problème à résoudre :

De nombreux bruits polluent l'environnement d'un véhicule. Certains sont dus aux pneumatiques. Parmi cette catégorie, une partie du spectre qui est particulièrement gênante est le mode de cavité. Le mode de cavité est la mise en résonance de la colonne de l'air interne du pneumatique. Un premier aspect de l'invention consiste à contribuer à l'amélioration du confort dans le véhicule en minimisant le bruit de roulement en provenance du pneumatique.

Selon un autre aspect, l'invention vise à contribuer à la mobilité étendue en procurant un moyen efficace de conserver le pneumatique à l'état gonflé même en cas de perforation du pneumatique par un corps étranger.

### Etat de la technique :

La gamme de fréquences du bruit intérieur dans le véhicule qui sont en relation avec le pneumatique en roulage est de 80 à 500 Hz. La fréquence du mode de cavité est fonction de la dimension du pneumatique. A très faible vitesse, le pic du premier mode de cavité (PMC) est d'autour de 230 Hz.

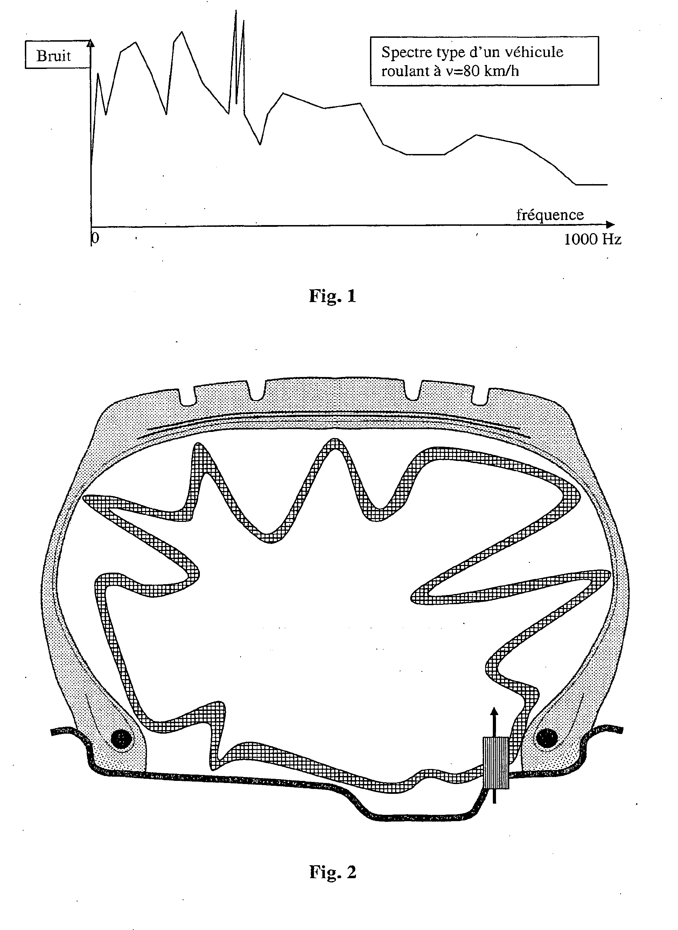

En roulage, deux pics apparaissent. A 80 km/h, les fréquences de ces pics sont de 210 et 250 Hz approximativement. La figure 1 montre bien ces fréquences. D'un point de vue du confort subjectif, les pics du PMC sont gênants car très audibles.

Il est connu que disposer des éléments mobiles à l'intérieur du pneumatique peut avoir un effet positif sur le bruit intérieur, amortissant en particulier le premier mode de cavité. Le document EP1214205 B1 illustre bien ce principe. Des particules de matériaux à cellules ouvertes sont disposées dans la cavité du pneumatique.

D'autres méthodes concernent des « poils » à l'intérieur de la cavité, par exemple tel que présenté dans le document US 6 343 843.

Autrement, le remplissage de la cavité par une mousse ou un autre matériau, tel que du sable est présenté dans le document .US 2001/0004924.

US 4 252 378 décrit un agencement dans lequel la jante est remplie avec une mousse.

EP1510366 A1 décrit un agencement avec un corps amortissant le bruit disposé sous la zone du sommet.

Les systèmes précédents son complexes et chers. D'autres documents pertinents peuvent être cités : Le document US-A-3 921 689 décrit un ensemble gonflable constitué d'une jante, d'un pneumatique et d'une structure gonflable constituée au moins partiellement d'un matériau de type mousse. Le document FR-A-2 755 400 décrit un ensemble gonflable constitué d'une jante, d'un pneumatique et d'une chambre à air constitué au moins partiellement d'un matériau de type mousse.

Pour pallier ces inconvénients, l'invention propose un ensemble gonflable constitué d'une chambre à air, d'un pneumatique et d'une jante, tous de dimensions adaptées, ladite chambre étant constituée d'un matériau de type mousse, **caractérisée en ce que** ladite chambre comporte une longueur Lc de la section normale de la chambre à air supérieure à la longueur Lpi de la section interne du pneumatique correspondant monté sur sa jante.

On a ainsi la relation Lc > Lpi, et selon une variante, Lc ≥ Lpi.

Le gain en bruit est très significatif. L'impact est supérieur à 4 dBA dans les zones du spectre correspondant aux pics du premier mode de cavité (PMC) et aux fréquences entre 300 et 350 Hz.

L'effet sur le bruit est encore plus positif si la chambre est grande par rapport au pneumatique, ce qui fait que, même après gonflage, la surface de la chambre n'est pas tendue et elle repliée. Ces plis sont positifs dans l'absorption du bruit et font, que la géométrie de la cavité soit moins « régulière ».

La chambre peut avoir une dimension relativement petite par rapport au pneumatique et être mise sous tension au gonflage, comme c'est habituel pour les chambres à air.

Selon un mode de réalisation de l'invention, Lc et Lpi sont dimensionnés de sorte que : 2.5 Lpi ≥ Lc ≥ Lpi. Il s'agit d'un intervalle dans lequel l'efficacité est importante, avec des caractéristiques mécaniques avantageuses.

Selon un autre mode de réalisation de l'invention, Lc et Lpi sont dimensionnés de sorte que : Lc > 2.5 Lpi. Il s'agit d'un intervalle dans lequel le principe de diminution de bruit est très efficace. Cependant, de telles chambres sont plus lourdes et plus difficiles à monter dans l'ensemble gonflé.

L'épaisseur de la chambre mousse est avantageusement comprise entre 0.5 et 10 mm. La plage entre 1 et 4 mm est la plage préférentielle.

On retrouve avantageusement deux principaux types de chambres en surdimension par rapport au pneumatique correspondant. Tout d'abord, les chambres mousse lisses. L'expansion de la mousse se fait en augmentant les dimensions de la chambre. Ensuite, les chambres mousse froissées. L'expansion de la mousse se fait en partie vers l'intérieur de la chambre repliant celle-ci. L'aspect final de ce mode de réalisation ressemble aux circonvolutions du cerveau.

Tous les détails de réalisation sont donnés dans la description qui suit, complétée par les figures 1 à 8, annexées à la présente, dans lesquelles :

la figure 1 illustre le spectre type d'un véhicule roulant à 80 km/h ;

la figure 2 illustre un exemple d'ensemble avec chambre selon l'invention présenté sans pression ;

la figure 3 illustre graphiquement le gain obtenu avec une chambre selon l'invention ;

la figure 4 illustre un exemple d'ensemble avec chambre selon l'invention présenté avec pression ;

les figures 5 et 7 illustrent différents exemples de matériaux pour réaliser la chambre, et certains types d'agencements possibles ;

la figure 6 illustre un exemple d'ensemble avec chambre selon l'invention présenté avec pression, le pneumatique étant perforé, mais pas la chambre, grâce aux caractéristiques de l'invention ;

la figure 8 présente un mode particulier de réalisation dans lequel la chambre est froissée.

La solution proposée est basée sur la réalisation d'une chambre à air en mousse. La chambre à air est en contact avec l'air interne et peut absorber les variations de pression. Cette chambre isole l'air interne du pneumatique lui-même et de la jante. De préférence, il y a création d'un contact non parfaitement adhérent entre la chambre et le pneumatique.

Des essais ont également permis de montrer qu'il est possible d'obtenir des résultats intéressants pour des longueurs Lc < Lpi, en particulier Lpi > Lc > 0.75 Lpi.

La densité de la mousse peut aller de 0.04 gr/ cm3 à 0.6 gr/cm3. L'optimum entre la qualité d'absorption et la masse de l'ensemble monté est entre 0.06 et 0.3 gr/cm3.

Les mousses à cellules fermées sont intéressantes pour cette application (mousses contenant préférentiellement du butyl). Cependant, les mousses à cellules ouvertes sont avantageusement utilisées.

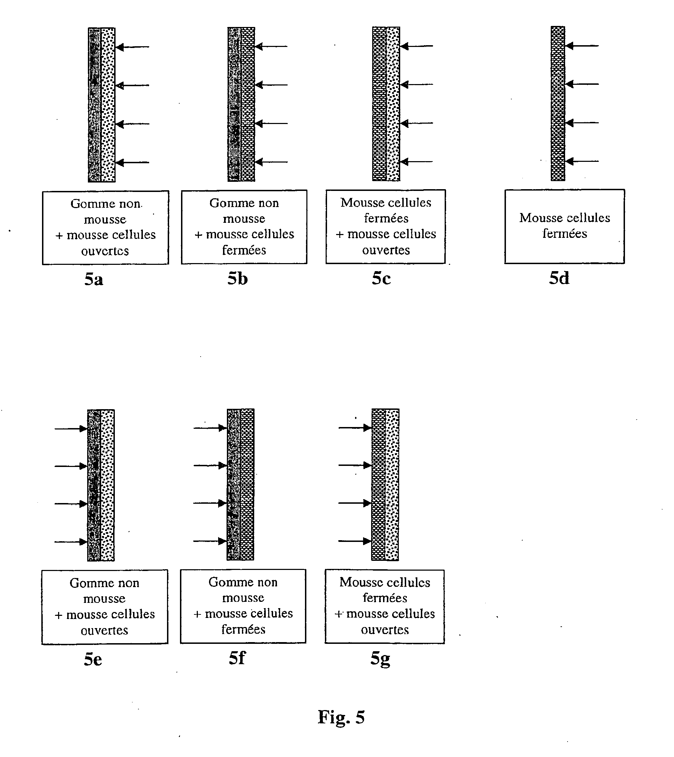

Un mode de réalisation préférentiel consiste à utiliser une mousse à cellules ouvertes en contact avec l'air sous pression et une mousse à cellules fermées en contact avec le pneumatique et la jante. Les figures 5a à 5g présentent des exemples d'agencements possibles.

Cette chambre à air peut jouer un rôle dans l'étanchéité du pneumatique. Dans le cas ou une mousse à cellules ouvertes est utilisée, il est nécessaire pour l'étanchéité d'incorporer une couche de faible perméabilité à l'air (une gomme non mousse, butyl de préférence ou bien une mousse à cellules fermées formée par du butyl de préférence).

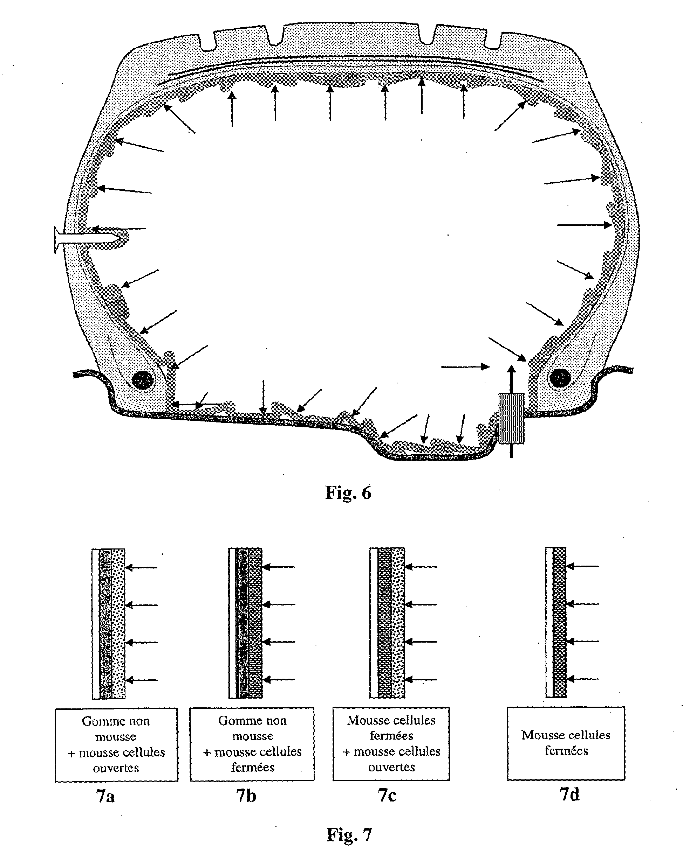

La chambre avec surlongueur permet au même temps d'être plus robuste face aux crevaisons, permettant à la couche d'étanchéité de se déformer pour s'adapter à l'élément perforant. Pour la robustesse de cette application il est intéressant de renforcer la chambre mousse avec un tissu de protection. Nous pouvons imaginer toutes les combinaisons des solutions précédentes avec le tissu de protection. Voir les exemples des figures 7a à 7d, dans lesquelles le tissu est présenté dans la zone blanche ou sans motif des dessins.

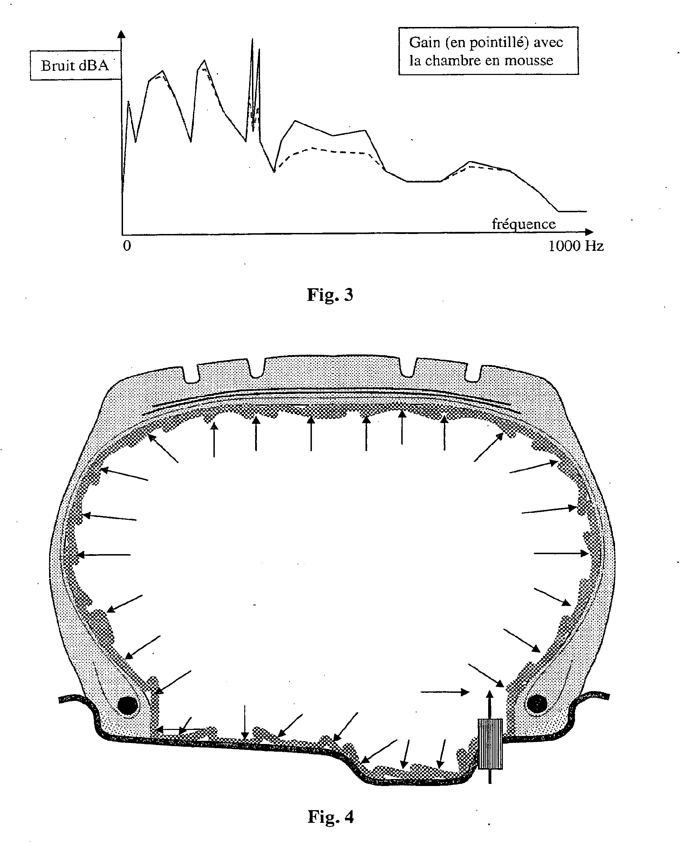

Il y a deux principaux types de chambres en surdimension par rapport au pneumatique correspondant. Tout d'abord, tel qu'illustré aux figures 2, 4 et 6, les chambres mousse lisses. L'expansion de la mousse se fait en augmentant les dimensions de la chambre.

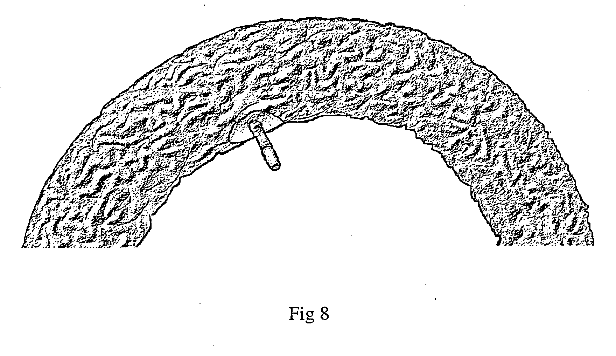

Ensuite, tel qu'illustré à la figure 8, les chambres mousse froissées. L'expansion de la mousse, se fait en partie vers l'intérieur de la chambre repliant celle-ci. L'aspect final de ce mode de réalisation ressemble aux circonvolutions du cerveau.

Un des grands avantages de ces mises en oeuvre réside dans le fait que les chambres peuvent être fabriquées d'une part dans un moule standard, et d'autre part avec un procédé standard. Le coût de cette chambre est donc sensiblement le même que celui de la chambre standard.

## Revendications

1. Ensemble gonflable constitué d'une chambre à air, d'un pneumatique et d'une jante, tous de dimensions adaptées, ladite chambre étant constituée d'un matériau de type mousse, **caractérisée en ce que** ladite chambre comporte une longueur Lc de la section normale de la chambre à air supérieure à la longueur Lpi de la section interne du pneumatique correspondant monté sur sa jante.

2. Ensemble gonflable selon la revendication 1, **caractérisé en ce que :** 2.5 Lpi ≥ Lc ≥ Lpi.

3. Ensemble gonflable selon la revendication 1, **caractérisé en ce que** Lc > 2.5 Lpi.

## Claims

1. Inflatable assembly consisting of an inner tube, of a tyre and of a rim, all of suitable dimensions, the said chamber consisting of material of the foam type, **characterized in that** the said chamber has a length Lc of the normal section of the inner tube greater than the length Lpi of the internal cross section of the corresponding tyre mounted on its rim.

2. Inflatable assembly according to Claim 1, **characterized in that:** 2.5 Lpi ≥ Lc ≥ Lpi.

3. Inflatable assembly according to Claim 1, **characterized in that:** Lc > 2.5 Lpi.

## Patentansprüche

1. Aufpumpbare Einheit, die aus einem Luftschlauch, einem Luftreifen und einer Felge besteht, alle mit geeigneten Abmessungen, wobei der Schlauch aus einem Material von der Art Schaumstoff besteht, **dadurch gekennzeichnet, dass** der Schlauch eine Länge Lc des Normalschnitts des Luftschlauchs größer als die Länge Lpi des Innenquerschnitts des entsprechenden auf seine Felge montierten Luftreifens aufweist.

2. Aufpumpbare Einheit nach Anspruch 1, **dadurch gekennzeichnet, dass** gilt: 2,5 Lpi ≥ Lc ≥ Lpi.

3. Aufpumpbare Einheit nach Anspruch 1, **dadurch gekennzeichnet, dass** gilt: Lc > 2,5 Lpi.
